# EUROPEAN PATENT APPLICATION

(11) **EP 4 715 675 A1**
(43) Date of publication of application: **25.03.2026**
(21) Application number: 25203657.9
(22) Date of filing: 22.09.2025
(51) Int. Cl.: G06N 3/048, G06N 3/09, G06N 3/0985, G06N 3/044, G06N 3/0464

(54) **SYSTEM AND METHOD FOR TRAINING MACHINE LEARNING MODELS**

(30) Priority: 24.09.2024 US 202463698534 P; 18.09.2025 US 202519332376
(71) Applicant: STMicroelectronics International N.V., 1228 Plan-les-Ouates, Geneva (CH)
(72) Inventor: SAH, Sudhakar, ON M5H 3G2 Toronto (CA); SABOORI, Ehsan, ON M5H 3G2 Toronto (CA); GANJI, Darshan Chandrashekhar, ON M5H 3G2 Toronto (CA)
(74) Representative: Casalonga

(57) **Abstract**

A system and method are disclosed for training and optimizing machine learning models for computer vision using mixed activation functions across model layers. A baseline model is received and a search space of candidate activation functions is defined. For each candidate substitution, a zero-cost accuracy score is computed without full training, and latency and memory costs are benchmarked across target hardware devices. Using this information, an optimization process such as random search, integer linear programming, or Local Zero Cost Maxima selects a layer-specific configuration of mixed activation functions that satisfies application constraints including accuracy, latency, and memory budgets. The selected model is then trained or fine-tuned to produce an optimized model. Experimental results on YOLO architectures demonstrate improved mean Average Precision, lower latency, and reduced memory usage relative to baseline models. This approach enables efficient deployment of computer vision models across CPUs, GPUs, and neural processing units.

## Description

### RELATED APPLICATION

This application claims priority to United States Provisional Application for Patent No. 63/698,534, filed September 24, 2024, the contents of which are incorporated by reference in their entirety.

### TECHNICAL FIELD

The following relates to systems and methods for implementing machine learning models for computer vision on devices.

### BACKGROUND

Choosing and building computer vision models is complicated. The application that the model is used for can be limited (e.g., the hardware can only support certain constraints such as speed and available computer), the training approach can be limited (e.g., cost of training can be controlled, there can be only so many images to train from, the training may need to be completed in a particular time), and the model itself can be required to perform under certain limitations (e.g., cost, latency and accuracy constraints).

Improving the accuracy of computer vision models has become a highly competitive area, with researchers constantly refining or developing new architectures to achieve state-of-the-art performance. For instance, the recent YOLO10 [5] architecture has set a new benchmark for object detection within the YOLO family [23], outperforming previous models on the popular Microsoft COCO dataset [14]. The current trend toward higher accuracy often involves designing more complex models by increasing the number of learnable parameters or adding performance-enhancing blocks. However, these gains in accuracy typically come at the cost of higher latency.

It is desirable to generate models that perform, or can be adapted to perform, according to a variety of constraints.

### SUMMARY

According to one or more embodiments as described herein, such a result can be achieved via the features set forth in the claims that follow.

Embodiments as described herein can also relate to a corresponding system/method.

The claims are an integral part of the technical teaching provided herein in respect of the embodiments.

A method of generating a machine learning model for computer vision includes receiving a baseline model architecture having a plurality of layers, each layer having a reference activation function. The method defines a search space of candidate activation functions for substitution at one or more layers of the baseline model. The method computes, for each candidate substitution, a zero-cost accuracy score without fully training the substituted model. The method constructs latency and memory cost tables for the candidate substitutions based on benchmarking across one or more target hardware devices. The method applies a search algorithm over the search space using the zero-cost accuracy scores and the cost tables to select a configuration of mixed activation functions across the plurality of layers, wherein the configuration satisfies one or more application constraints including an accuracy constraint, a latency constraint, or a memory constraint. The method trains the selected configuration of mixed activation functions to generate an optimized machine learning model for deployment on the one or more target hardware devices.

The search algorithm may be an integer linear programming optimization configured to minimize latency while satisfying an accuracy constraint.

The search algorithm may be random search guided by the zero-cost accuracy scores and the cost tables.

The one or more application constraints may be based on limitations of a target hardware device selected from a CPU, GPU, or neural processing unit.

The mixed activation functions may include at least two of: Rectified Linear Unit (ReLU), Sigmoid Linear Unit (SiLU), Hardswish, ReLU6, or LeakyReLU.

The constructing may include executing candidate models on the target hardware device using a runtime environment selected from: ONNX Runtime, TensorFlow Lite, or a custom runtime.

The method may further include fine-tuning the optimized machine learning model using a training dataset having images sized according to constraints of the target hardware device.

The selecting may include replacing activation functions in the first three layers of the baseline model with a Rectified Linear Unit (ReLU) activation while maintaining Sigmoid Linear Unit (SiLU) activations in the remaining layers.

The replacing of activation functions in the first three layers may reduce latency and memory consumption relative to the baseline model.

The selecting may include applying a Local Zero Cost Maxima approach that iteratively replaces activations in the baseline model with candidate activations, retains a replacement if a zero-cost score is improved relative to the reference activation, and trains the resulting modified model on a training dataset.

The Local Zero Cost Maxima approach may generate a mixed activation model having both Sigmoid Linear Unit (SiLU) and Rectified Linear Unit (ReLU) activations.

The Local Zero Cost Maxima approach may generate a mixed activation model having both Sigmoid Linear Unit (SiLU) and Hardswish activations.

A system for generating optimized machine learning models includes a processor and a memory storing instructions that, when executed by the processor, cause the system to receive a baseline model architecture having a plurality of layers, each layer having a reference activation function. The system generates a search space of candidate activation functions for substitution at one or more layers of the baseline model. The system computes zero-cost accuracy scores for the candidate substitutions without fully training the substituted models. The system constructs latency and memory cost tables for the candidate substitutions based on benchmarking across one or more target hardware devices. The system applies a search algorithm over the search space using the zero-cost accuracy scores and the cost tables to select a configuration of mixed activation functions across the plurality of layers, wherein the configuration satisfies one or more application constraints including an accuracy constraint, a latency constraint, or a memory constraint. The system trains the selected configuration of mixed activation functions to produce an optimized machine learning model for deployment on the one or more target hardware devices.

The search algorithm may be an integer linear programming optimization configured to minimize accuracy cost subject to a latency constraint.

The zero-cost accuracy scores may be computed using a Neural Tangent Kernel Weighted Operation (NWOT) metric.

The one or more target hardware devices may include at least one of: a Jetson Nano GPU, an ARM Cortex-A53 processor, an ARM Cortex-A57 processor, or a neural processing unit.

The optimized machine learning model may be a YOLO-based object detection model having a plurality of mixed activation functions distributed across different layers of the model.

The memory may further store a runtime environment configured to evaluate latency of candidate models on the one or more target hardware devices.

The processor may be further configured to replace activations in early layers of the baseline model with low-latency activation functions while preserving higher-accuracy activations in later layers.

The processor may be further configured to replace activation functions in the first three layers of the baseline model with a Rectified Linear Unit (ReLU) activation while maintaining Sigmoid Linear Unit (SiLU) activations in the remaining layers.

The processor may be further configured to implement a Local Zero Cost Maxima approach that iteratively replaces layer activation functions with candidate activations when a zero-cost accuracy score improves, thereby generating a mixed activation model.

The mixed activation model may have both Sigmoid Linear Unit (SiLU) and Rectified Linear Unit (ReLU) activations.

The mixed activation model may have both Sigmoid Linear Unit (SiLU) and Hardswish activations.

### BRIEF DESCRIPTION OF THE DRAWINGS

The foregoing features and advantages, as well as others, will be described in detail in the following description of specific embodiments given by way of illustration and not limitation with reference to the accompanying drawings, in which:
FIG. 1 is a schematic diagram of a system for training a machine learning model.
FIG. 2 is a block diagram of an example framework for training a mixed-activation machine learning model.
FIGS. 3A, 3B, 3C each show a diagram of example different stages of a framework for training an example mixed-activation machine learning model.
FIG. 4 is a flow chart of an example process for training an optimized mixed-activation machine learning model.
FIG. 5 is a flow chart illustrating operations performed in learning an optimal architecture.
FIGS. 6A, 6B, 6C, and 6D each show a graph of test results for an example methodology and system as described herein.

In order to favor the clarity of the features shown, the figures may be drawn in simplified fashion, are not necessarily drawn to scale, and the edges of the figures may not necessarily indicate termination of the extent of the feature.

### DETAILED DESCRIPTION

In the figures and in the rest of the description, like features have been designated by like references in the various figures; as such, a corresponding description may not be repeated for the sake of brevity. In particular, the structural and/or functional features that are common amongst the various embodiments may have the same references and may have identical structural, dimensional, and material properties. Finally, the different embodiments and variants are not exclusive to one another and can be combined amongst themselves.

The references used herein are provided merely for convenience and hence do not define the extent of protection or the scope of the embodiments.

In the ensuing description, one or more specific details are illustrated, aimed at providing an in-depth understanding of embodiments of this invention. The embodiments may be implemented without one or more of the specific details, or with other methods, components, materials, etc. In some cases, known structures, materials, or operations may not be illustrated or described in detail so as to not lose focus on the main aspects of embodiments of the invention.

Reference to "an embodiment" or "one embodiment" in the present description should be understood as meaning "at least one embodiment". Moreover, phrases such as "in an embodiment" or "in one embodiment" that may be present in one or more points of the present description do not necessarily refer to one and the same embodiment. Moreover, particular configurations, structures, or characteristics may be combined in any manner known to skilled persons in one or more other embodiments.

Unless indicated otherwise, when reference is made to two elements directly connected together, this signifies direct contact of one element to the other without any intermediate elements. When reference is made to two elements connected or coupled together, this signifies that these two elements can be either directly connected or they can be indirectly connected via one or more other intermediate elements.

Unless specified otherwise, the expressions "about", "around", "approximately", "substantially" and "in the order of" signify within 10 % or 10°, and preferably within 5 % or 5°. Additionally, the phrase "comprised between ... and ... " or equivalent signifies that the end points are included, unless otherwise indicated.

Where not otherwise defined, all technical and scientific terms used herein have the same meaning commonly used by skilled persons in the field pertaining to the present invention. The views included in the attached figures and described herein are not intended as representations of structural features, i.e., constructional limitations, but should be interpreted as representations of functional features, i.e., functions that can be implemented in different ways.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures, or to a ... as orientated during use as described in the description, but not limited thereby.

Through exploration, it was observed that employing different activation functions for various layers in a model can improve mean Average Precision (mAP) by 1-2% and reduce latency by 20-30%, compared to the baseline model using SiLU activation across all layers.

In this disclosure, approaches are proposed to train models based on the aforementioned discovery. The approaches, referred to as Neural Architecture Search (NAS), can be used to automatically select the optimal activation function for each layer of a model based on given latency and accuracy constraints. These latency and accuracy constraints can be based on, for example, the limitations of the hardware implementing the models.

To summarize, this disclosure introduces ActNAS, a NAS based method to search for the best configuration of the model using mixed activation function for each layer. This disclosure also explores the impact of different activation functions on memory and latency on different edge devices. Experimental data demonstrates that the disclosed ActNAS generated models have better mAP and lower latency compared to baseline models trained on COCO dataset and tested on difference edge devices.

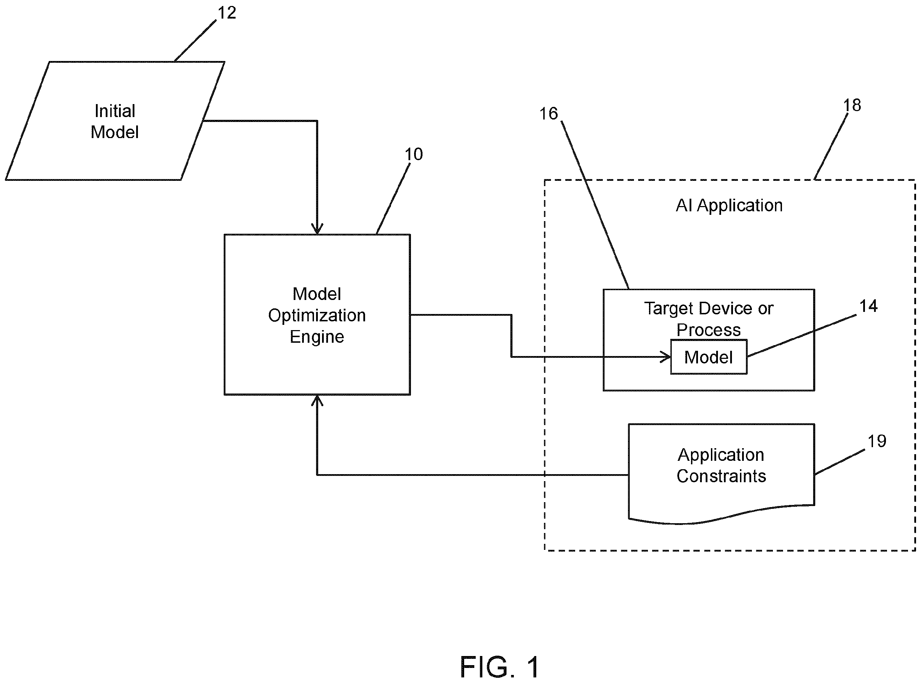

Turning now to the figures, FIG. 1 illustrates a model optimization engine 10 which is configured, as described below, to take an initial model 12 and generate or otherwise determine an optimized model 14 to be used by or deployed upon a target device or process 16, the "target 16" for brevity. The target 16 is used in or purposed for an AI application 18 that uses the optimized model 14. The AI application 18 has one or more application constraints 19 that dictate how the optimized DNN 14 is generated or chosen.

What follows is a description of example methodology or the model optimization engine 10, and related discussion.

Activation functions introduce non-linearity into Neural Networks, enabling them to learn complex patterns. Different activation functions vary in speed and accuracy, ranging from faster but less accurate options like ReLU to slower but more accurate functions like SiLU or SELU. Typically, same activation function is used throughout an entire model architecture. In this disclosure, a comprehensive study was conducted on the effects of using mixed activation functions in YOLO-based models, evaluating their impact on latency, memory usage, and accuracy across CPU, NPU, and GPU edge devices. For example, computer vision models (e.g., YOLO models [23], whether in the n, m, s, l, or tiny variants), consistently use the SiLU [22] activation function due to its superior accuracy compared to alternatives like ReLU [19]. The higher accuracy of the SiLU activation function often comes at the cost of increased latency. Other activation functions such as 46 ReLU [2], LeakyReLU [7], or Hardswish [3] have been used in place of SiLU, however they suffer from similar limitations (e.g., latency, accuracy, etc.). While computer vision models (e.g., YOLO models) do allow the option to switch from SiLU to other activations such switching is across the entire architecture, and includes similar tradeoffs.

A review of existing approaches follows:

The closest existing approaches include: designing hybrid activation functions, and simplifying blocks in the model by applying a different activation function than the main one or mixing activations in image classification models.

Hybrid Activation: In [20], the authors combined softmax [24] and sparsemax [4] in the final activation layer of a Convolutional Neural Network (CNN) for gait analysis using silhouettes. Similarly, in [25], the authors proposed an activation function that can replace ReLU, SiLU, and Hardswish in deep learning models, providing a hybrid approach.

Block Simplification: YOLOv6-3.0 [8] introduced the idea of simplifying the neck of YOLO models [23] by replacing the SiLU activation in the SPPF block [10] with ReLU, creating the SimSPPF block. This was further modified into the SimCSPSPPF block to enhance performance. These works demonstrate that different activation functions have unique strengths and weaknesses.

Existing approaches Designing Model Architecture using NAS: In [6], Zoph demonstrated how to design Recurrent Neural Networks (RNNs) with constituent nodes using different activation functions such as ReLU, identity, tanh, or sigmoid. Building on this, [21] introduced a method to search across activation functions like ReLU and Gaussian-smoothed ReLU. Zhenyu [26] further proposed Eigen-NAS, a train-free algorithm that searches for optimal skip connections and activations for each layer in image classification models, showing improvements on datasets like CIFAR-100 and ImageNet-16 but observed a drop in accuracy with CIFAR-10.

The proposed mixed activation approaches, and related model optimization processes were used in experiments, and the best model generated through these methods demonstrates a slight improvement in mean Average Precision (mAP) compared to baseline model (SiLU), while being 22.28% faster and consuming 64.15% less memory on the reference NPU device.

The present disclosure includes optimizing activation functions within computer vision models based on layer-specific accuracy and latency data.

Zero-Cost(ZC) Estimators: Zero-cost estimators, which provide accuracy predictions without full training, have been shown to significantly reduce training time. In [12], Ivan et al. analyzed various ZC estimators, including those from [16, 1, 13], in the context of YOLO models, concluding that the NWOT metric [16] performs well for networks using different activations. However, ZC estimators have not yet been applied to assess the micro-level impact of architectural changes, such as altering individual activation functions within a model.

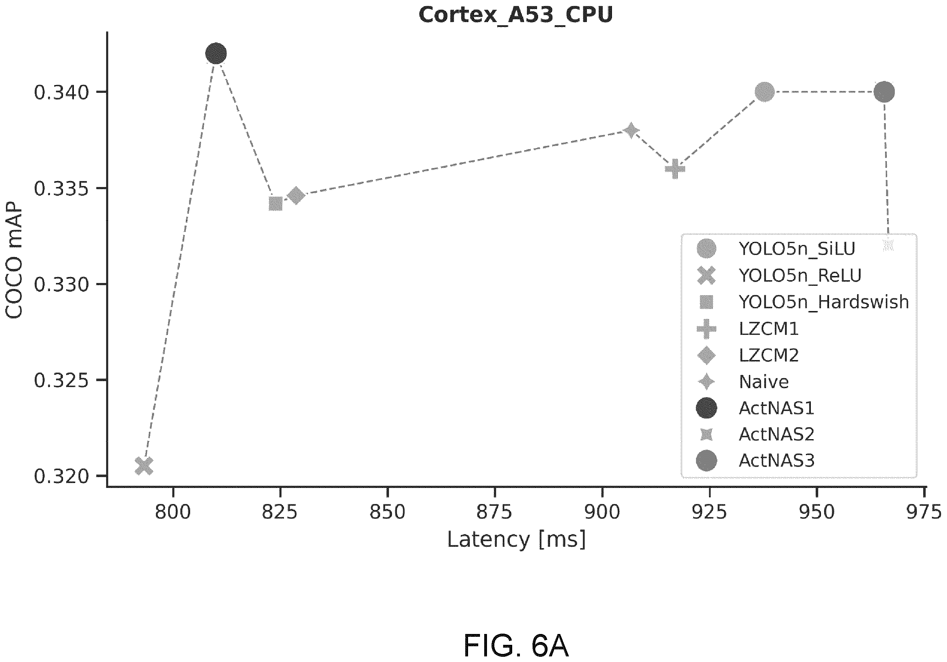

Unlike the straightforward approach of using the same activation function across all layers in a model, mixed activation models incorporate multiple activation functions within the architecture. As illustrated in FIGS. 6A-6D, the YOLO5n model with SiLU activation achieves the highest mAP but is the slowest across different devices, while the model with ReLU activation is the fastest, though it experiences a significant drop in mAP.

The disclosed approaches rely on mixed activation within a model to identify the optimal combination of activation functions for each layer, creating a resulting model that strikes the best balance between latency and accuracy.

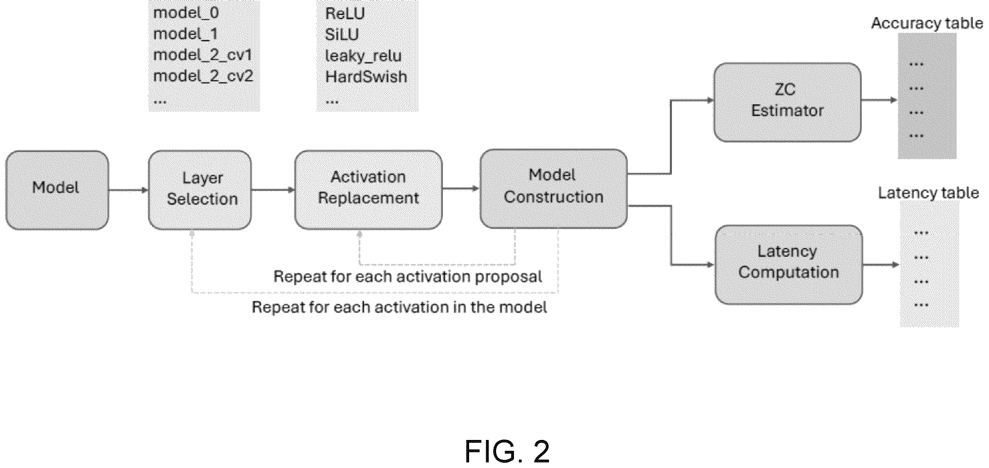

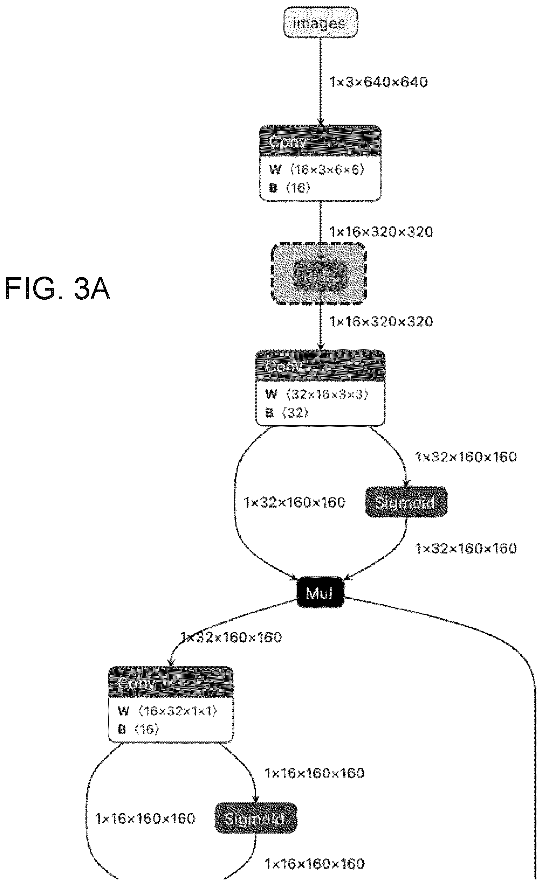

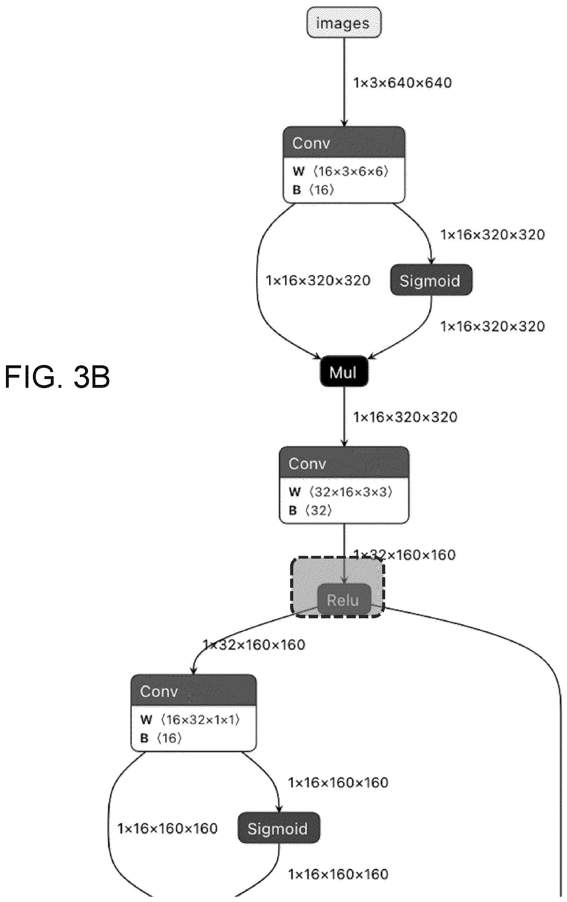

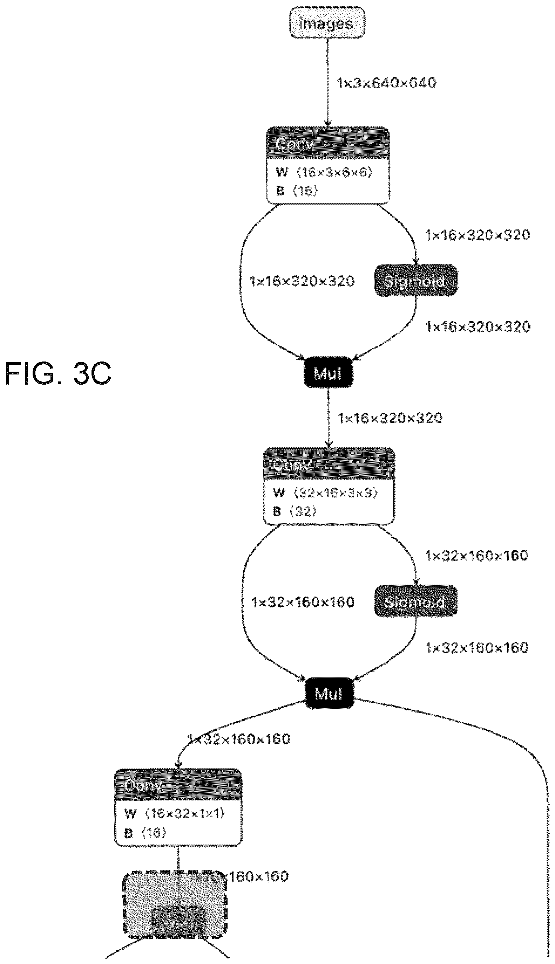

In experiments, the YOLO5n model was combined with the YOLO8n head (which offers better accuracy), with the SiLU-based model serving as the reference. As shown in FIG. 2, a search space was generated by systematically replacing each activation function in the reference model with a set of candidate activations: ReLU, SiLU, Hardswish, ReLU6, and LeakyReLU. One activation at a time was replaced, as depicted in FIGS. 3A, 3B, and 3C, resulting in 345 candidate models for YOLO5n (since the reference model has 69 activations and there are 5 candidate activations for each layer).

To evaluate the impact of each activation replacement, a new model was created for each candidate and its accuracy, latency, and memory usage were measured and compared to the reference model. This process was iterated and repeated for all 345 candidate models. The results are recorded in the below performance tables: the latency table, accuracy table, and memory table. Each entry in the accuracy table includes the layer name, activation name, reference accuracy, and delta accuracy (the difference between the reference model's accuracy and the accuracy of the model with the replaced activation). Similarly, the latency and memory tables follow the same structure but record latency and memory values instead of accuracy.

**Table 1: Performance of ActNAS models compared to baseline models on GPU and CPU**

| Model | mAP | Jetson Nano | | | Cortex A-53 | | |
|---|---|---|---|---|---|---|---|
| | | Latency | Improvement (%) | | Latency Improvement (%) | | |
| | | (ms) | Hswish | SiLU | (ms) | Hswish | SiLU |
| YOLO5n_SiLU | 0.3400 | 27.20 | - | - | 937.89 | - | - |
| YOLO5n_ReLU | 0.3205 | 20.18 | - | - | 793.27 | - | - |
| YOLO5n_Hardswish | 0.3342 | 25.63 | - | - | 823.91 | - | - |
| LZCM1(SiLU/ReLU) | 0.3360 | 26.61 | -21.54% | 2.17% | 916.97 | -0.58% | 2.23% |
| LZCM2(SilU/Hswish) | 0.3346 | 31.15 | -21.54% | -14.52% | 828.72 | -0.58% | 11.64% |
| First(ReLU/SiLU) | 0.3380 | 24.55 | 4.21% | 9.74% | 906.78 | -10.06% | 3.32% |
| ActNAS1(Mixed) | 0.3420 | 24.78 | 3.32% | 8.90% | 809.96 | 1.69% | 13.64% |
| ActNAS2(Mixed) | 0.3320 | 23.50 | 8.31% | 13.60% | 966.74 | -17.34% | -3.08% |
| ActNAS3(Mixed) | 0.3400 | 24.51 | 4.37% | 9.89% | 965.64 | -17.20% | -2.96% |

**Table 2: Performance of ActNAS models compared to baseline models on NPU**

| Model | mAP | NPU | | | NPU | | |
|---|---|---|---|---|---|---|---|
| | | Latency Improvement (%) | | | RAM (KB) Improvement (%) | | |
| | | (ms) | Hswish | SiLU | Hswish | SiLU | |
| YOLO5n_SiLU | 0.3400 | 22.35 | - | - | 1230.00 | - | - |
| YOLO5n _ReLU | 0.3205 | 17.46 | - | - | 588.00 | - | - |
| YOLO5n_Hardswis h | 0.3342 | 18.53 | - | - | 392.00 | - | - |
| LZCM1(SiLU/ReL U) | 0.3360 | 21.87 | -5.50% | 2.15% | 1200.00 | -206.12% | 2.44% |
| LZCM2(SiLU/Hswi sh) | 0.3346 | 19.55 | -5.50% | 12.53% | 624.75 | -59.38% | 49.21 % |
| First(SiLU/ReLU) | 0.3380 | 21.43 | -15.65% 4.12% | | 661.50 | -68.75% | 46.22 % |
| ActNAS1(Mixed) | 0.3420 | 17.37 | 6.26% | 22.28% | 514.50 | -31.25% | 58.17 % |
| ActNAS2(Mixed) | 0.3320 | 19.27 | -3.99% | 13.78% | 520.63 | -32.81% | 57.67 % |
| ActNAS3(Mixed) | 0.3400 | 17.50 | 5.56% | 21.70% | 441.00 | -12.50% | 64.15 % |

### Accuracy Estimator

As the number of activation and layer combinations increases, the search space for mixed activation models grows exponentially, making it computationally expensive and time-consuming to train each model and evaluate the impact of replacing activations. In one example approach, the disclosure contemplates the use of a NWOT Zero-Cost (ZC) metric [16] to estimate the effect of changing activation functions in individual layers on model accuracy. Other approaches are also contemplated.

Experiments validated that the NWOT score correlates strongly with the accuracy of fully trained models using SiLU, ReLU, and Hardswish activations. This high correlation indicates that the NWOT score can reliably predict the impact of per-layer activation changes on accuracy without the need for full training. For each candidate activation replacement, the NWOT score is calculated, and the accuracy table is updated accordingly, as described in the previous section. This approach significantly reduces the computational cost and time required to explore the mixed activation model search space.

### 110 3.2 Latency Computation

The impact of different activation functions on latency and memory depends on the runtime and hardware architecture. For this reason, a variety of hardware, including two CPUs (ARM Cortex-A57 in Jetson Nano and ARM Cortex-A53 on Raspberry Pi 3), an embedded GPU (Jetson Nano), and a reference Neural Processing Unit (NPU) were used for experimentation. To measure the performance of the models on these devices, ONNX Runtime [18] for Jetson Nano, TensorFlow Lite (TFLite) [15] for the ARM Cortex processors, and a custom compiler/runtime for the NPU is used. Each model is converted to ONNX, TFLite, or a custom format depending on the hardware. Latency values are recorded as average over 50 runs to ensure correctness. The input size of 224x224 is used for NPU due to memory limitations while other latency numbers are calculated using 640x640 input. This variation in hardware and runtime ensures that the results aren't biased towards a specific platform and or runtime, providing a balanced perspective of how different activations perform across different systems.

### Mixed Activation Model Search

Latency, memory and accuracy table obtained from benchmarking step is used to construct mixed activation models.

### Local Zero Cost Maxima Approach

Various approaches to replacing activations functions are contemplated. In one approach, a model is created that employs just two activation functions, such as SiLU and ReLU. Starting with a reference model that uses only SiLU, the Local Zero Cost Maxima (LZCM) method is applied to iteratively replace activations with ReLU based on the zero-cost NWOT score. If the NWOT score improves when a specific layer's SiLU activation is replaced with ReLU, that replacement is kept. The modified model is then trained from scratch on the COCO dataset. Using this approach, two models were developed: LZCM1, which mixes SiLU and ReLU, and LZCM2, which mixes Hardswish and ReLU activations.

### First Approach

Benchmarking models generated using the LZCM approach show that activations in layers closer to the input have a significant impact on both latency and memory due to the larger feature sizes in those layers. Replacing the activations in the initial layers with ReLU significantly reduces latency and memory usage. In one approach, the first three activations near the input are replaced with a ReLU activation, while keeping the remaining layers as SiLU. This was found to lead to an efficient balance between performance and resource consumption.

### Activation NAS Approach

The LZCM method follows a straightforward decision-making process, replacing activations in individual layers based on their zero-cost score. However, this approach only optimizes each layer locally and doesn't account for the combined impact of replacing activations in multiple layers at once.

In another approach, this disclosure contemplates an Activation NAS (ActNAS) approach that searches for the optimal activation function for each layer while considering a global budget for latency, memory, or accuracy (e.g., based on the hardware constraints, as well as application constraints). The search space for ActNAS is defined by the number of layers multiplied by the number of activation function options. To navigate this space, the latency, memory, and accuracy tables, along with predefined constraints, are used to guide the search. For ActNAS, experiments with both random search and Integer Linear Programming (ILP) we performed to find the best activation configurations.

### Random Search

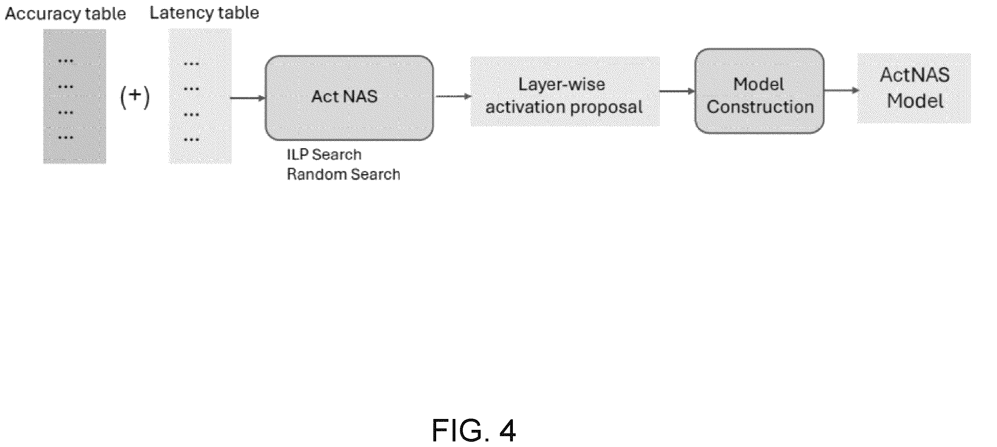

As shown in FIG. 4, generating model proposals using Activation NAS requires pre-computed latency and accuracy tables. These tables capture the changes in these metrics when a single layer's activation in the original YOLO model (with SiLU activation) is replaced by an alternative activation. The tables are then converted into latency and accuracy cost matrices, where the rows represent the layers being modified and the columns represent candidate activations (SiLU, ReLU, Hardswish, LeakyReLU, and ReLU6).

In addition to these matrices, latency or accuracy constraints of the application, model, or hardware can be used, which serve as the overall budget that the algorithm can work within when constructing new models with mixed activations. The random search process begins by randomly selecting activations from the search space that fit within the given constraints. It then computes the total cost (in terms of latency or accuracy) for the model and marks it as the best possible model at that point. The algorithm repeats the random search, comparing each newly constructed model with the previous best. If a new model has a better overall cost, it updates the best model definition and continues iterating through the random selection process.

### ILP Search

To generate model proposals with mixed activations, latency and accuracy matrices were constructed, where each element represents the difference in metrics from the original SiLU- based YOLO model when a single layer's activation is replaced. An Integer Linear Programming (ILP) optimization problem was formulated to find an optimized model. The objective was to minimize the latency and accuracy cost while adhering to constraints on the overall latency or accuracy of the newly constructed models.

In the ILP formulation, one variable vector represents the indices of the layers where activations are applied, and the other represents the candidate activations for those layers. Open-source PuLP library [17], a Python toolkit for linear programming, was used to solve the ILP problem formatted. The result is a ranked list of the top k model proposals. To ensure diversity among proposals, the solution avoids excessive overlap, keeping the model architectures meaningfully different.

In Tables 1 and 2 (above), the ActNAS1 model was constructed by applying an accuracy constraint while minimizing latency for the Cortex A-53 CPU hardware. The ILP search can be adapted for different hardware targets by imposing a latency constraint on the constructed model. For example, ActNAS2 and ActNAS3 were built by setting constraints for latency on the Jetson Nano GPU and Cortex A-53 CPU, respectively, with the goal of minimizing accuracy cost while staying within the latency budget for each device.

### Model Fine-tuning

Ultralytics [11] was used to train and fine-tune candidate models. For consistency across experiments, all hyperparameters were kept exactly the same, training each model from scratch for 300 epochs using 640 × 640 COCO images and evaluating them on the COCO validation set. While mixed activation models could be fine-tuned for a few epochs starting from pre-trained weights, all models were trained from scratch to ensure a fair comparison.

For all experiments in this paper, the YOLOv5n model [11] was used. Initial benchmarking was conducted on the Pascal VOC dataset [9] to avoid training multiple models on the larger COCO dataset [14], with final benchmarking results generated using COCO. Tables 1 and 2 summarize mAP, RAM (NPU only), and latency values for both the reference models and mixed activation models. The baseline models consist of YOLO5 trained on COCO using SiLU, ReLU, and Hardswish activations, respectively. The LZCM1 model aims to minimize overall latency by mixing SiLU and ReLU activations using a simple search approach, while the LZCM2 model prioritizes maximizing accuracy by combining the more accurate activations, SiLU and Hardswish. Both models achieve mAP values slightly lower, but very close to, those of the SiLU and Hardswish reference models. In terms of latency, the LZCM1 model performs slightly better than the SiLU model across all devices (e.g., 21.87 ms vs. 22.35 ms on the NPU). The SiLU/Hardswish mixed activation model demonstrates a better accuracy-latency trade-off, being 12.5% faster than the SiLU model but 5.3% slower than the Hardswish model on the NPU. A similar trend is observed on A53 and A57 CPUs as well as the Jetson Nano GPU. Lastly, the first approach of replacing the first three activations from SiLU to ReLU resulted in slightly slower performance compared to other baseline models, but the drop in mAP was minimal (0.002) compared to the SiLU model.

ActNAS1 and ActNAS3 were generated using the disclosed Activation NAS approach, targeting the NPU as the primary device, as discussed in the previous section. ActNAS1 achieved the highest mAP and the lowest latency, showing 6.26%, 3.32%, 0.97%, and 1.69% improvements in efficiency on the NPU, Jetson Nano GPU, Cortex A57 CPU, and A53 CPU, respectively, compared to the Hardswish model. It also outperformed the SiLU models by 22.28%, 8.90%, 11.92%, and 13.64% on the same devices. Additionally, it was found that ActNAS 1 required 58% less memory than the SiLU model on the NPU.

These experiments demonstrate that the performance of YOLO models can be preserved by creating mixed activation models using a zero-cost proxy-based accuracy estimation, along with latency and memory computation on the target device, paired with an effective NAS approach.

ActNAS2, generated with the Jetson Nano GPU as the target, outperformed both the baseline and Hardswish models on Jetson Nano, highlighting the hardware-aware nature of the proposed search method, as it adapts to different hardware profiles.

It was also observed that the best latency-accuracy trade-off models tended to use ReLU variants (ReLU6, LeakyReLU, and ReLU) in the initial layers. None of the ActNAS models utilized SiLU or Hardswish in the first three layers. This suggests that replacing the initial layers with more efficient activations and following them with high-performance activations-selected via NAS to minimize accuracy loss-produces optimal models across a range of hardware devices.

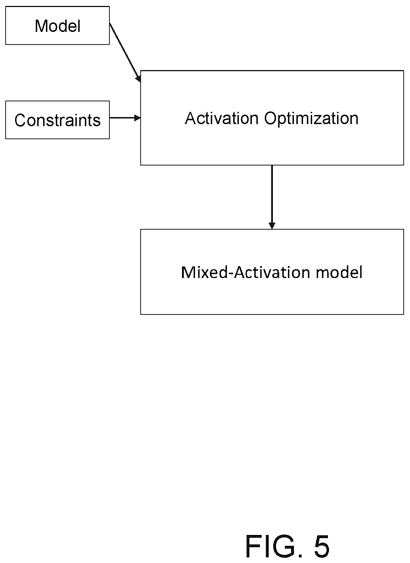

FIG. 5 shows an example method of training a mixed-activation model.

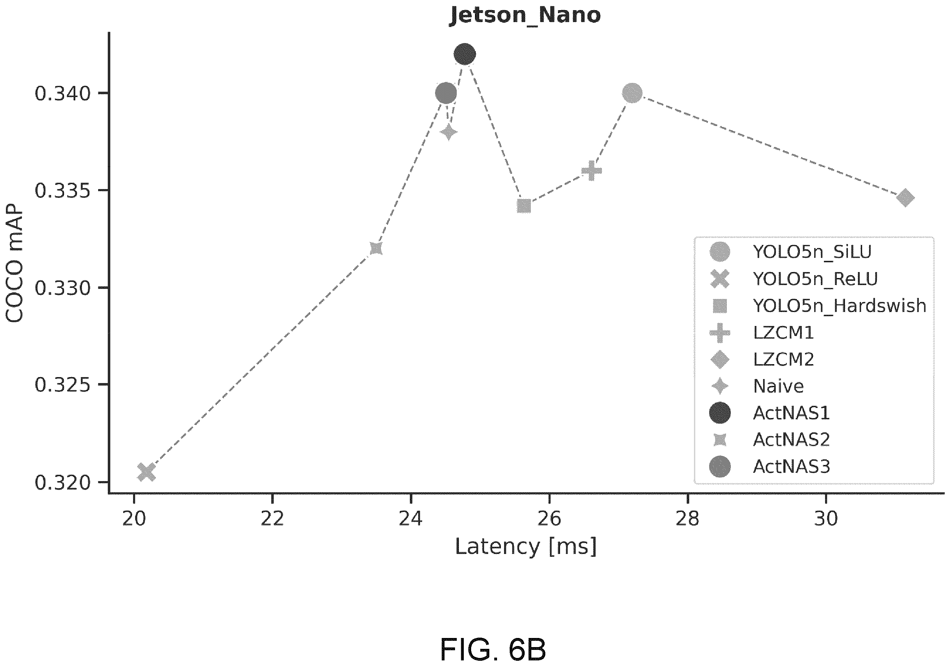

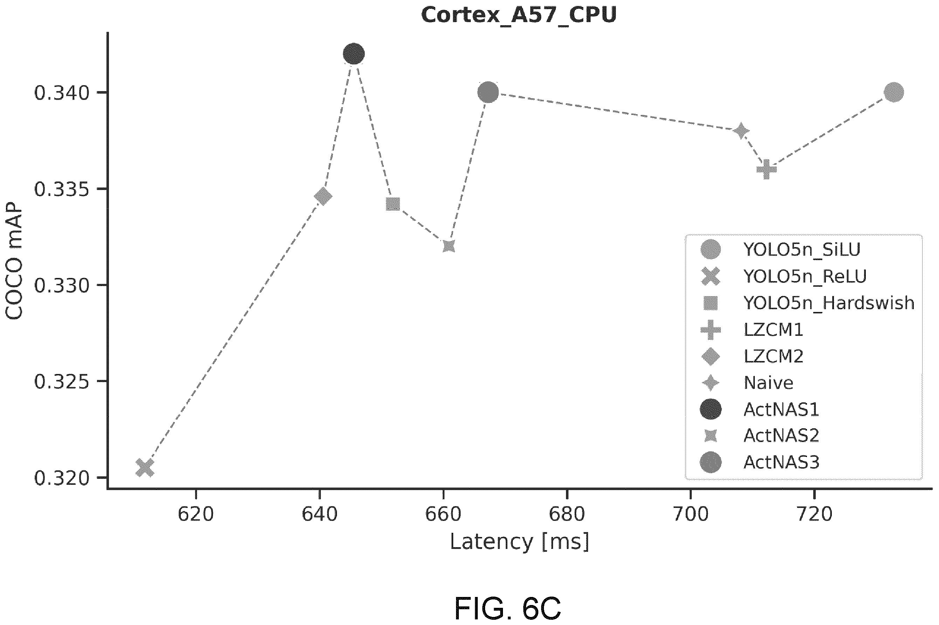

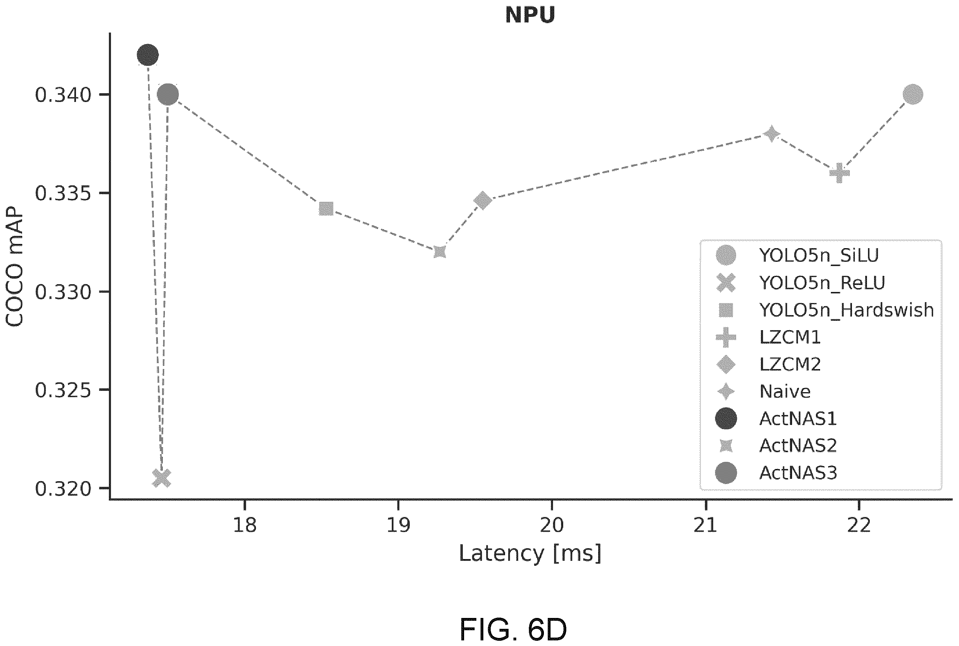

FIGS. 6A, 6B, 6C, and 6D compares models with mixed activation functions with baseline models, showing that Activation NAS models offer the best accuracy-latency trade-off on all tested hardware.

For simplicity and clarity of illustration, where considered appropriate, reference numerals may be repeated among the figures to indicate corresponding or analogous elements. In addition, numerous specific details are set forth in order to provide a thorough understanding of the examples described herein. However, it will be understood by those of ordinary skill in the art that the examples described herein may be practiced without these specific details. In other instances, well-known methods, procedures and components have not been described in detail so as not to obscure the examples described herein. Also, the description is not to be considered as limiting the scope of the examples described herein.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

It will also be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the engine 10, any component of or related to the engine, etc., or accessible or connectable thereto. Any application or module herein described may be implemented using computer readable/executable instructions that may be stored or otherwise held by such computer readable media.

Note that this disclosure is rooted in computer technology and provides improvements to the functioning of computer systems themselves. The disclosed methods cannot be performed as mental processes by a human. For example, the disclosed methods require computing per-layer zero-cost accuracy estimations using the NWOT metric, generating latency and memory benchmarking data across CPUs, GPUs, and NPUs, and solving an integer linear programming (ILP) optimization over hundreds of candidate model architectures. These steps involve creating 345 candidate models in one embodiment, generating accuracy, latency, and memory tables, converting models into ONNX, TFLite, or custom NPU formats, executing them on hardware, and averaging latency values across 50 runs. Such steps require computational resources, hardware runtimes, and large-scale arithmetic operations that cannot be carried out by human thought alone and that indeed could not be performed by a human with pen and paper.

Also, tather than reciting an abstract principle, this disclosure provides a practical application that directly improves the operation of computer vision models deployed on hardware. Specifically, the disclosed methods improve accuracy, reduces latency, and lower memory consumption, enabling efficient deployment on resource-constrained devices. These constitute improvements in the functioning of the computer itself and in the field of machine learning model deployment, not merely in the content of the information being processed.

In addition, this disclosure addresses a technological problem that arises in computer vision systems: how to optimize activation functions across neural network layers given real-world hardware constraints. Conventional approaches using a single activation function result in inefficiencies and performance tradeoffs. The disclosed Activation Neural Architecture Search (ActNAS) introduces a novel, hardware-aware optimization process that produces technical results unattainable through human mental reasoning or manual design.

The technical nature of this disclosure is further demonstrated by its measurable improvements. Experimental results show that models generated by the disclosed methods achieve lower latency (20-30% reductions), lower memory usage (up to 64.15% less), and higher mean Average Precision (+1-2%) compared to baseline models. These outcomes represent concrete enhancements to computing efficiency and device functionality, not abstract theoretical benefits.

The disclosure also explains why manual or purely mental design is inadequate. Using a single activation function throughout a model produces undesirable latency and accuracy tradeoffs. The disclosed methods require per-layer activation selection guided by zero-cost accuracy prediction and device-specific latency and memory measurements, under global budgets for accuracy, latency, and memory. The observed correlations between NWOT scores and fully trained accuracy, as well as the empirical findings that initial layers benefit from ReLU variants while later layers can use higher-accuracy activations, arise from algorithmic exploration and hardware benchmarking, not human intuition. The scale and nature of the computations, on the orer of hundreds of candidate models, per-layer cost matrices, ILP-based selection, 50-run latency averages, and 300-epoch training, make human mental performance impracticable.

Accordingly, the disclosed methods and systems improve computer functionality itself by producing faster and more memory-efficient computer-vision models without unacceptable loss of accuracy, and in several embodiments with higher mAP than baselines. The claims therefore recite specific, hardware-tied, technical solutions implemented via concrete computational steps and device-level execution, rather than abstract mental processes.

While this invention has been described with reference to illustrative embodiments, this description is not intended to be construed in a limiting manner. Various modifications and combinations of the illustrative embodiments, as well as other embodiments of the invention, will be apparent to skilled persons in the field of the invention upon reference to the description and the figures. It is therefore intended that the appended claims encompass any such modifications or embodiments.

Finally, the practical implementation of the embodiments and variants described herein is within the capabilities of those skilled in the art based on the functional description provided hereinabove while falling within the scope of the invention as defined in the attached claims.

Listing of references cited herein and incorporated by reference: [1] Abdelfattah, M.S., Mehrotra, A., Dudziak, L., Lane, N.D.: Zero-cost proxies for lightweight nas. arXiv preprint arXiv:2101.08134 (2021); [2] Agarap, A.F.: Deep learning using rectified linear units (relu), arXiv preprint arXiv:1803.08375 (2018); [3] Andrew Howard, Mark Sandler, G.C.: Searching for mobilenetv3, arXiv preprint arXiv:1905.02244 (2019); [4] André F. T. Martins, R.F.A.: From softmax to sparsemax: A sparse model of attention and multi-label classification, arXiv preprint arXiv:1602.02068 (2016); [5] Ao Wang, Hui Chen, L.L.: Yolov10: Real-time end-to-end object detection, arXiv preprint arXiv:2405.14458 (2024); [6] Barret Zoph, Q.V.L.: Neural architecture search with reinforcement learning, arXiv preprint arXiv:1611.01578 (2017); [7] Bing Xu, Naiyan Wang, T.C.: Empirical evaluation of rectified activations in convolutional network, arXiv preprint arXiv:1505.00853 (2015); [8] Chuyi Li, Lulu Li, Y.G.: Yolov6 v3.0: A full-scale reloading, arXiv preprint arXiv:2301.05586 (2023); [9] Everingham, M., Van Gool, L., Williams, C.K.I., Winn, J., Zisserman, A.: The PASCAL Visual Object Classes Challenge 2012 (VOC2012) Results (2012), http://www.pascal-network.org/ challenges/VOC/voc2012/workshop/index.html; [10] Glenn, J.: (2022), https://github.com/ultralytics/yolov5/releases/tag/v6; [11] Jocher, G.: Ultralytics yolov5 (2020). https://doi.org/10.5281/zenodo.3908559, https:// github.com/ultralytics/yolov5; [12] Lazarevich, I., Grimaldi, M., Kumar, R., Mitra, S., Khan, S., Sah, S.: Yolobench: Benchmark- ing efficient object detectors on embedded systems (2023), https://arxiv.org/abs/2307. 13901; [13] Li, G., Yang, Y., Bhardwaj, K., Marculescu, R.: Zico: Zero-shot nas via inverse coefficient of variation on gradients, arXiv preprint arXiv:2301.11300 (2023); [14] Lin, T.Y., Maire, M., Belongie, S., Bourdev, L., Girshick, R., Hays, J., Perona, P., Ramanan, D., Zitnick, C.L., Dollár, P.: Microsoft coco: Common objects in context (2014), http:// arxiv.org/abs/1405.0312, cite arxiv:1405.0312; [15] Lite, T.: Tensorflow lite for mobile and edge (2024), https://onnx.ai/, accessed: 2024-07-16; [16] Mellor, J., Turner, J., Storkey, A., Crowley, E.J.: Neural architecture search without training, In: International Conference on Machine Learning. pp. 7588-7598. PMLR (2021); [17] Mitchell, S., Consulting, S.M., O'Sullivan, M., Dunning, I.: Pulp: A linear programming toolkit for python (2022), https://optimization-online.org/?p=11731; [18] ONNX: Open neural network exchange (2024), https://onnx.ai/, accessed: 2024-07-16; [19] Prajit Ramachandran, Barret Zoph, Q.V.L.: Searching for activation functions, arXiv preprint arXiv:1710.05941 (2017); [20] Privietha, P., Raj, V.J.: Hybrid activation function in deep learning for gait analysis, In: 2022 International Virtual Conference on Power Engineering Computing and Control: Developments in Electric Vehicles and Energy Sector for Sustainable Future (PECCON). pp. 1-7 (2022), https://doi.org/10.1109/PECCON55017.2022.9851128; [21] Quynh Nguyen, M.M.: Global convergence of deep networks with one wide layer followed by pyramidal topology, arXiv preprint arXiv:2002.07867 (2020); [22] Stefan Elfwing, Eiji Uchibe, K.D.: Sigmoid-weighted linear units for neural network function approximation in reinforcement learning, arXiv preprint arXiv:1702.03118 (2017); [23] Terven, J., Cordova-Esparza, D.: A comprehensive review of yolo: From yolov1 and beyond, arXiv preprint arXiv:2304.00501 (2023); [24] Tim Pearce, Alexandra Brintrup, J.Z.: Understanding softmax confidence and uncertainty, arXiv preprint arXiv:2106.04972 (2021); [25] Yevgeniy Bodyanskiy, S.K.: Adaptive hybrid activation function for deep neural networks, In: System research and information technologies (2022), https://doi.org/10.20535/SRIT.2308- 8893.2022.1.07; and [26] Zhu, Z., Liu, F., Chrysos, G.G., Cevher, V.: Generalization properties of nas under activation and skip connection search, arXiv preprint arXiv:2209.07238 (2022).

## Claims

1. A method of generating a machine learning model for computer vision, comprising:
receiving a baseline model architecture comprising a plurality of layers, each layer having a reference activation function;
defining a search space of candidate activation functions for substitution at one or more layers of the baseline model;
computing, for each candidate substitution, a zero-cost accuracy score without fully training the substituted model;
constructing latency and memory cost tables for the candidate substitutions based on benchmarking across one or more target hardware devices;
applying a search algorithm over the search space using the zero-cost accuracy scores and the cost tables to select a configuration of mixed activation functions across the plurality of layers, wherein the configuration satisfies one or more application constraints comprising an accuracy constraint, a latency constraint, or a memory constraint; and
training the selected configuration of mixed activation functions to generate an optimized machine learning model for deployment on the one or more target hardware devices.

2. The method of claim 1, wherein the search algorithm comprises an integer linear programming optimization configured to minimize latency while satisfying an accuracy constraint.

3. The method of claim 1 or 2, wherein the search algorithm comprises random search guided by the zero-cost accuracy scores and the cost tables.

4. The method of any one of claims 1 to 3, wherein the one or more application constraints are based on limitations of a target hardware device selected from a CPU, GPU, or neural processing unit.

5. The method of any one of claims 1 to 4, wherein the mixed activation functions comprise at least two of: Rectified Linear Unit (ReLU), Sigmoid Linear Unit (SiLU), Hardswish, ReLU6, or LeakyReLU.

6. The method of any one of claims 1 to 5, wherein constructing comprises executing candidate models on the target hardware device using a runtime environment selected from: ONNX Runtime, TensorFlow Lite, or a custom runtime.

7. The method of any one of claims 1 to 6, further comprising fine-tuning the optimized machine learning model using a training dataset comprising images sized according to constraints of the target hardware device.

8. The method of any one of claims 1 to 7, wherein the selecting comprises replacing activation functions in the first three layers of the baseline model with a Rectified Linear Unit (ReLU) activation while maintaining Sigmoid Linear Unit (SiLU) activations in the remaining layers.

9. The method of claim 8, wherein replacing the activation functions in the first three layers reduces latency and memory consumption relative to the baseline model.

10. The method of any one of claims 1 to 7, wherein the selecting comprises applying a Local Zero Cost Maxima approach that:
iteratively replaces activations in the baseline model with candidate activations;
retains a replacement if a zero-cost score is improved relative to the reference activation; and
trains the resulting modified model on a training dataset.

11. The method of claim 10, wherein the Local Zero Cost Maxima approach generates a mixed activation model comprising both Sigmoid Linear Unit (SiLU) and Rectified Linear Unit (ReLU) activations or comprising both Sigmoid Linear Unit (SiLU) and Hardswish activations.

12. A system for generating optimized machine learning models, comprising:
a processor;
a memory storing instructions that, when executed by the processor, cause the system to:
receive a baseline model architecture comprising a plurality of layers, each layer having a reference activation function;
generate a search space of candidate activation functions for substitution at one or more layers of the baseline model;
compute zero-cost accuracy scores for the candidate substitutions without fully training the substituted models;
construct latency and memory cost tables for the candidate substitutions based on benchmarking across one or more target hardware devices;
apply a search algorithm over the search space using the zero-cost accuracy scores and the cost tables to select a configuration of mixed activation functions across the plurality of layers, wherein the configuration satisfies one or more application constraints comprising an accuracy constraint, a latency constraint, or a memory constraint; and
train the selected configuration of mixed activation functions to produce an optimized machine learning model for deployment on the one or more target hardware devices.

13. The system of claim 12, wherein the search algorithm is an integer linear programming optimization configured to minimize accuracy cost subject to a latency constraint.

14. The system of claim 12 or 13, wherein the zero-cost accuracy scores are computed using a Neural Tangent Kernel Weighted Operation (NWOT) metric.

15. The system of any one of claims 12 to 14, wherein the one or more target hardware devices comprise at least one of: a Jetson Nano GPU, an ARM Cortex-A53 processor, an ARM Cortex-A57 processor, or a neural processing unit.
